(19) Europäisches Patentamt
European Patent Office
Office européen des brevets

(11) **EP 3 040 438 A1**

(12) **EUROPEAN PATENT APPLICATION**
published in accordance with Art. 153(4) EPC

(43) Date of publication:
**06.07.2016 Bulletin 2016/27**

(21) Application number: **14841312.3**

(22) Date of filing: **26.08.2014**

(51) Int Cl.:
**C22C 38/00** (2006.01)          **C22C 38/46** (2006.01)
**F16C 3/06** (2006.01)

(86) International application number:
**PCT/JP2014/072278**

(87) International publication number:
**WO 2015/029993 (05.03.2015 Gazette 2015/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.08.2013 JP 2013176113**

(71) Applicant: **Kabushiki Kaisha Kobe Seiko Sho (Kobe Steel, Ltd.)**
**Kobe-shi, Hyogo 651-8585 (JP)**

(72) Inventors:
• **TAKAOKA, Hiroyuki**
  **Takasago-shi, Hyogo 676-8670 (JP)**
• **SHINOZAKI, Tomoya**
  **Takasago-shi, Hyogo 676-8670 (JP)**
• **IBANO, Akira**
  **Kobe-shi, Hyogo 651-2271 (JP)**

(74) Representative: **Müller-Boré & Partner Patentanwälte PartG mbB**
**Friedenheimer Brücke 21**
**80639 München (DE)**

(54) **HIGH-STRENGTH STEEL, AND CRANKSHAFT MANUFACTURED USING SAID HIGH-STRENGTH STEEL**

(57)    An object of this invention is to provide a high-strength steel endowed with high fatigue strength while also having increased strength and toughness, and a crankshaft manufactured using this high-strength steel. The high-strength steel according to the invention contains 0.30 mass % or more and 0.50 mass % or less of C, more than 0 mass % and 0.15 mass % or less of Si, 0.80 mass % or more and 1.5 mass % or less of Mn, 0.8 mass % or more and 2.4 mass % or less of Ni, 1.0 mass % or more and 3.0 mass % or less of Cr, 0.35 mass % or more and 0.70 mass % or less of Mo, 0.10 mass % or more and 0.25 mass % or less of V and 0.001 mass % or more and 0.040 mass % or less of Al, with the balance being iron and inevitable impurities. The high-strength steel is mainly composed of martensit, wherein a Mn concentration in cementite is 0.90 mass % or more and 1.80 mass % or less, and a ratio of Mn content to Si content is 5.50 or more.

FIG. 3

## Description

Technical Field

The present invention relates to a high-strength steel and to a crankshaft manufactured using the same. The crankshaft of the invention may be suitably used in, for example, the diesel engine of a ship or generator.

Background Art

Performance enhancements such as increased power, improved durability and greater compactness are sought in the diesel engines used in ships and generators. A need thus exists for high strength and high toughness in the forging steels that form the crankshafts used in diesel engines. Specifically, such forging steels are required to have a tensile strength of 1,000 MPa or more.

NiCrMo-based high-strength steels have been developed as forging steels having a tensile strength of 1,000 MPa or more. For example, Patent Document 1 discloses a high-strength, high-toughness forging steel used in crankshafts for diesel engines in ships and generators. Patent Document 2 discloses a high-strength forging steel that can be manufactured at a relatively low cost.

Forging steels for the crankshafts of such diesel engines are also required to have a high fatigue strength. Fatigue strength generally increases in proportion with the strength (hardness) of a material, but it is commonly known that the susceptibility to defects such as inclusions which are unavoidably present in materials becomes large at high strengths. Hence, in conventional forging steels, at tensile strengths of 1,000 MPa or more, it is not easy to obtain a forging steel having a high fatigue strength. Accordingly, there exists a desire for a high-strength steel that is endowed with high fatigue strength while also having increased strength and toughness.

## Citation List

### Patent Literature

Patent Document 1: Japanese Unexamined Patent Publication No. 2010-248540
Patent Document 2: Japanese Patent No. 4332070

## Summary of Invention

An object of this invention, which was arrived based on the above circumstances, is to provide a high-strength steel that is endowed with high fatigue strength while also having increased strength and toughness. A further object thereof is to provide a crankshaft manufactured using the high-strength steel.

The high-strength steel of the present invention that was able to solve the above problem contains C (carbon): 0.30 mass % or more and 0.50 mass % or less, Si (silicon): more than 0 mass % and 0.15 mass % or less, Mn (manganese): 0.80 mass % or more and 1.5 mass % or less, Ni (nickel): 0.8 mass % or more and 2.4 mass % or less, Cr (chromium): 1.0 mass % or more and 3.0 mass % or less, Mo (molybdenum): 0.35 mass % or more and 0.70 mass % or less, V (vanadium): 0.10 mass % or more and 0.25 mass % or less, and Al (aluminum): 0.001 mass % or more and 0.040 mass % or less, with the balance being iron and inevitable impurities. The high-strength steel is mainly composed of martensite, wherein a Mn concentration in cementite is 0.90 mass % or more and 1.80 mass % or less, and a ratio of Mn content to Si content is 5.50 or more.

The high-strength steel of the present invention, by having a steel composition set in the above ranges, a metal microstructure that is mainly composed of martensite and a ratio of Mn content to Si content set to 5.50 or more, is able to exhibit a high fatigue strength while also being endowed with increased strength and toughness. Specifically, the high-strength steel of the invention, by having a steel composition in the above ranges and a metal microstructure that is primarily martensite, can be conferred with increased hardenability, strength and toughness. Moreover, the high-strength steel of the invention, by having a ratio of Mn content to Si content set to 5.50 or more, is able to suppress the coarse prior austenite grains that form in portions of the metal microstructure, which is thought to enable the steel to exhibit a high fatigue strength.

In the high-strength steel of the invention, the Mn concentration in cementite is 0.90 mass % or more and 1.80 mass % or less. By setting the Mn concentration in cementite within this range, suitably soft regions form around the cementite that is thought to be a source of fatigue crack initiation. These regions act to relieve fatigue crack-initiating stress and are thought to be capable of greatly improving the fatigue properties. As a result, a high-strength, high-toughness steel that exhibits higher fatigue strength is obtained.

The high-strength steel of the invention preferably further contains Cu (copper) in the range of more than 0 mass % and 2 mass % or less. Moreover, in the high-strength steel of the invention, X defined by formula (1) below is 690 or more. The inventors have discovered that by setting X in formula (1) to a fixed value or more, the hardenability of large forgings can be improved. When the value of X is the lower limit indicated above or more, steel having an excellent hardenability and a higher strength can be obtained. In formula (1) below, C, Si, Mn, Ni, Cr, Mo and V are respectively values which represent the contents, in percent by mass, of C, Si, Mn, Ni, Cr, Mo and V.

$$X = 1026.4 \times C - 75.4 \times Si + 37.7 \times Mn + 50.6 \times Ni + 31.7 \times Cr + 82.5 \times Mo + 838.4 \times V \qquad (1)$$

The crankshaft of the invention that was able to resolve the above problem can be obtained using the foregoing high-strength steel. Because it is obtained using this high-strength steel, the crankshaft of the invention has, as noted above, a high strength and toughness, and also has an excellent fatigue strength. The crankshaft of the invention is useful in, for example, diesel engines for ships, generators and the like.

The high-strength steel of the invention exhibits a high fatigue strength while also having a high strength and toughness. Hence, the high-strength steel of the invention is useful as, for example, a material for diesel engine crankshafts to be used in ships, generators and the like.

## Brief Description of Drawings

Fig. 1 is side view showing the shape of a fatigue test sample used in a fatigue test.
Fig. 2 is an enlarged cross-sectional view of a micro hole in a fatigue test sample used in a fatigue test.
Fig. 3 is a graph showing the relationship between X calculated using formula (1) defined in the invention and the tensile strength TS.

## Description of Embodiments

Embodiments of the high-strength steel of the invention are described below.

<Metal Microstructure>

The metal microstructure of the high-strength steel in the invention is mainly composed of martensite. Here, "mainly composed of martensite" means that the ratio of martensite to the overall metal microstructure is 95% by surface area or more. The balance of the microstructure other than martensite is, for example, bainite and pearlite.

The martensite percentage is preferably 98% by surface area or more, and more preferably 100% by surface area. By having the metal microstructure be primarily martensite, steel endowed with a high strength is obtained and the crankshaft strength can be increased.

The balance of the microstructure other than martensite is 5% by surface area or less, preferably 2% by surface area or less, and most preferably 0% by surface area.

The martensite percentage can be measured by, for example, using an optical microscope to photograph a cross-section of Nital-etched steel, visually examining the micrograph, separating the martensite from other metal microstructures in the micrograph, and calculating the percent surface area of the martensite relative to the entire metal microstructure.

(Mn Concentration in Cementite)

As mentioned above, the metal microstructure of the high-strength steel of the invention is mainly composed of martensite. This martensite contains cementite, the Mn concentration in the cementite being 0.90 mass % or more and 1.80 mass % or less. The lower limit of the Mn concentration in cementite is more preferably 1.0 mass %, and the upper limit of the Mn concentration is more preferably 1.5 mass %. When the Mn concentration in cementite is below this lower limit, stress that becomes a cause of fatigue crack initiation is thought to concentrate around the cementite, lowering the fatigue properties. Conversely, when the Mn concentration in the cementite exceeds the above upper limit, the region around cementite softens too much, lowering the fatigue properties. By setting the Mn concentration in the cementite within the above range, a suitably soft region forms around the cementite that is thought to be a source of fatigue crack initiation. This region presumably acts to relieve stresses that cause fatigue cracking, enabling the fatigue properties to be significantly improved. As a result, the invention enables high-strength, high-toughness steel having a higher fatigue strength to be obtained. The concentration of alloying elements in cementite can be analyzed by quantitative analysis using energy dispersive x-ray spectrometry (EDX) with a scanning electron microscope (SEM). EDX is a technique for carrying out elemental analysis and compositional analysis by detecting characteristic x-rays generated by electron beam irradiation and spectrally separating them by energy.

<Composition of Steel>

The lower limit in the C content is 0.30 mass %, preferably 0.32 mass %, and more preferably 0.34 mass %. The upper limit in the C content is 0.50 mass %, preferably 0.48 mass %, and more preferably 0.46 mass %. When the C content is below this lower limit, sufficient hardenability and strength may not be achievable. On the other hand, when the C content exceeds this upper limit, the toughness may decrease excessively, promoting inverse V segregation in large ingots, and thus lowering the toughness and fatigue properties. By setting the C content in the above range, a suitable steel hardenability and strength can be achieved.

The lower limit in the Si content is more than 0 mass %. The upper limit in the Si content is 0.15 mass %, preferably 0.12 mass %, and more preferably 0.1 mass %. At a Si content of 0 mass %, the hardenability of the steel is inadequate. On the other hand, at a Si content in excess of this upper limit, the toughness and fatigue strength may decrease. Also, when the Si content is higher, thus making the subsequently described Mn/Si ratio smaller, coarsening of the prior austenite grains is promoted, which may lower the toughness and fatigue strength. By setting the Si content in the above range, a suitable steel hardenability can be achieved.

The lower limit in the Mn content is 0.80 mass %. The upper limit in the Mn content is 1.5 mass %, preferably 1.3 mass %, and more preferably 1 mass %. At a Mn content below this lower limit, sufficient strength and hardenability cannot be achieved, and it may not be possible suppress the coarsening of prior austenite grains. On the other hand, a Mn content in excess of this upper limit promotes inverse V segregation, which may lower the toughness. By setting the Mn content within this range, a suitable steel hardenability and strength can be achieved.

The lower limit in the Ni content is 0.8 mass %, and preferably 1 mass %. The upper limit in the Ni content is 2.4 mass %, preferably 2 mass %, and more preferably 1.7 mass %. At a Ni content below this lower limit, the strength and toughness may decrease. On the other hand, a Ni content above this upper limit invites an excessive rise in strength, lowering the toughness. By setting the Ni content in this range, a suitable steel strength and toughness can be achieved.

The lower limit in the Cr content is 1.0 mass %, and preferably 1.2 mass %. The upper limit in the Cr content is 3.0 mass %, preferably 2 mass %, and more preferably 1.7 mass %. At a Cr content below this lower limit, it may not be possible to achieve sufficient hardenability. On the other hand, a Cr content in excess of this upper limit promotes inverse V segregation, which may lower the toughness. By setting the Cr content is this range, a suitable steel hardenability and toughness can be achieved.

The lower limit in the Mo content is 0.35 mass %, and preferably 0.45 mass %. The upper limit in the Mo content is 0.70 mass %, and preferably 0.6 mass %. At a Mo content below this lower limit, the hardenability and strength sometimes decrease, and inverse V segregation may be promoted. On the other hand, a Mo content above this upper limit promotes microsegregation within steel ingots. In addition, because Mo is a heavy element, weight segregation may arise, as a result of which the toughness sometimes decreases. By setting the Mo content in this range, a suitable steel hardenability, strength and toughness can be achieved.

The lower limit in the V content is 0.10 mass %. The upper limit in the V content is 0.25 mass %, preferably 0.2 mass %, and more preferably 0.17 mass %. At a V content below this lower limit, the hardenability and strength are inadequate. On the other hand, because V has a low equilibrium partition coefficient, at a V content above this upper limit, microsegregation may arise. As a result, the toughness sometimes decreases. By setting the V content in this range, a suitable steel hardenability and strength can be achieved.

The A1 content has a lower limit of 0.001 mass % and an upper limit of 0.040 mass %. At an A1 content below this lower limit, the A1 may be unable to effectively exhibit an oxygen content-lowering action as a deoxidizing element. As a result, a large amount of oxides may form, lowering the toughness. On the other hand, an A1 content in excess of this upper limit leads to a coarsening of the oxide, which may instead lower the toughness and fatigue properties. By setting the A1 content within this range, a steel oxygen content-lowering effect is suitably exhibited.

The high-strength steel of the invention includes the above constituents, with the balance being iron and inevitable impurities. Examples of inevitable impurities include elements such as P (phosphorus), S (sulfur), N (nitrogen), Sn (tin), As (arsenic), Pb (lead) and Ti (titanium) that are inadvertently introduced depending on the conditions of the feedstock, materials, manufacturing equipment, etc.

Of these inevitable impurities, the upper limit in the P content is preferably 0.15 mass %, more preferably 0.1 mass %, and even more preferably 0.05 mass %. When the P content exceeds this upper limit, intergranular fracture due to grain boundary segregation may be promoted.

The upper limit in the S content is preferably 0.02 mass %, more preferably 0.01 mass %, even more preferably 0.005 mass %, and most preferably 0.0025 mass %. When the S content exceeds this upper limit, sulfide-based inclusions grow larger, which may lead to a deterioration in strength.

The upper limit in the N content is preferably 0.008 mass %, more preferably 0.007 mass %, and even more preferably 0.0065 mass %. When the N content exceeds this upper limit, the toughness may deteriorate.

The high-strength steel according to the invention has the constituent composition described above, although intentionally including also other alloying elements is effective as well. Depending on the type of alloying element thus included, the properties of the steel are further improved.

For example, from the standpoint of enhancing hardenability, the high-strength steel of the invention preferably includes Cu. This effect is achieved by the addition of more than 0 mass % of Cu, with the lower limit of the Cu content being preferably 0.1 mass %. The upper limit of the Cu content is preferably 2 mass %. Conversely, when the Cu content exceeds this upper limit, the toughness may decrease. The Cu content is more preferably 1.5 mass % or less, and even more preferably 1 mass % or less.

(Ratio of Mn Content to Si Content)

The ratio of Mn content to Si content (also denoted below as the "Mn/Si ratio") in the high-strength steel of the invention must be 5.50 or more. At a Mn/Si ratio below 5.50, coarse prior austenite grains form, which may lower the fatigue strength and toughness. In the invention, because the Mn/Si ratio is controlled to 5.50 or more, the formation of coarse prior austenite grains in the metal microstructure can be suppressed. The lower limit in the Mn/Si ratio is preferably 10, and more preferably 20. The upper limit of in the Mn/Si ratio is determined by the above-mentioned Si and Mn contents, and is preferably 30 or less, more preferably 28 or less, and even more preferably 25 or less.

The upper limit in the grain size of the prior austenite grains is preferably 100 μm, more preferably 80 μm, and even more preferably 50 μm. By having a metal microstructure that is primarily martensite and setting the size of prior austenite grains in the metal microstructure to preferably the above-indicated upper limit or less, the concentration of stress acting on coarse areas of the prior austenite grains can be relieved, making it possible not only to increase the toughness but also to increase the fatigue properties. The lower limit in the size of prior austenite grains, although not particularly limited, is preferably 20 μm or more, more preferably 25 μm or more, and even more preferably 30 μm or more.

As used herein, the "size of prior austenite grains" refers to the maximum diameter of prior austenite grains observed under an optical microscope at a magnification of 100X and in five fields. The size of prior austenite grains can be measured by the "Method for Visualizing Ferrite and Prior Austenite Crystal Grain Boundaries in Steel" described in JIS-G-0551.

(X Defined by Formula (1))

In the high-strength steel of the invention, the lower limit of the value X defined by formula (1) below is preferably 690, more preferably 695, and even more preferably 700. The inventors have discovered that, by setting X in formula (1) to this lower limit or above, the steel hardenability improves and the strength of large forgings such as crankshafts is enhanced. That is, when X is at or more than the above lower limit, the steel has an excellent hardenability and a higher strength. The upper limit of formula (1) is determined based on the constituent composition, and is preferably 1,000 or less, more preferably 900 or less, and even more preferably 800 or less. In formula (1) below, C, Si, Mn, Ni, Cr, Mo and V are respectively values representing the contents, in percent by mass, of C, Si, Mn, Ni, Cr, Mo and V.

$$X = 1026.4 \times C - 75.4 \times Si + 37.7 \times Mn + 50.6 \times Ni + 31.7 \times Cr + 82.5 \times Mo + 838.4 \times V \qquad (1)$$

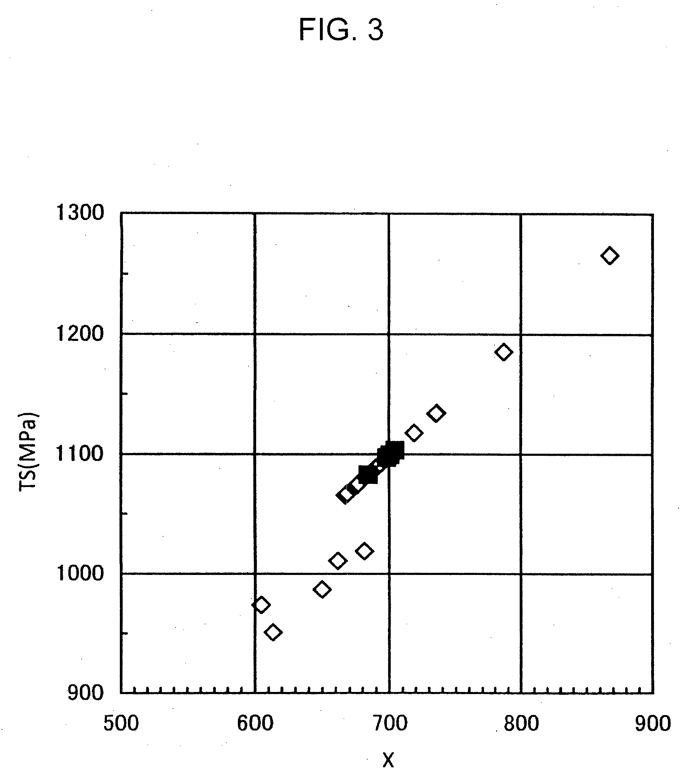

When X defined in the invention is larger, the tensile strength TS of forgings also become larger. This is explained while referring to Fig. 3, which was created by plotting, of the subsequently described examples, the results of those examples in which only the essential constituents were included and production was carried out at a tempering temperature of 600°C. In Fig. 3, filled-in squares (■) indicate the results of Examples 1 to 3, 8 and 9 in Table 2, and open diamonds (◊) indicate the results of Comparative Examples 1 to 17 and 19 in Table 2. It is apparent from Fig. 3 that when X is larger, the tensile strength TS also becomes larger in direct proportion thereto.

<Mechanical Properties>

The tensile strength TS of the high-strength steel of the invention has a lower limit of preferably 1,050 MPa, and more preferably 1,100 MPa. At a tensile strength at or above this lower limit, the strength required of a crankshaft can be achieved. The strength can be evaluated by, for example, the tensile test set forth in JIS-Z-2241.

The absorbed energy (vE) at room temperature of the high-strength steel according to the invention has a lower limit of preferably 50 J, and more preferably 80 J. When the absorbed energy (vE) is at or above this lower limit, the toughness required of a crankshaft can be achieved. The toughness is evaluated by measuring the absorbed energy (vE) at room temperature in, for example, the Charpy impact test based on JIS-Z-2242.

The endurance limit ratio in the high-strength steel of the invention has a lower limit of preferably 0.45, more preferably 0.5, even more preferably 0.52, and most preferably 0.54. When the endurance limit ratio is at or above this lower limit, the fatigue strength required of a crankshaft can be achieved. The endurance limit ratio is determined by dividing the breaking stress measured in a fatigue test by the maximum stress in a tensile test. The breaking stress can be measured by, for example, the rotating bending fatigue test of metal materials according to JIS-Z-2274.

<Production Method>

The method of producing the high-strength steel of the invention is not particularly limited, and may involve, in the usual manner: ingot formation → component adjustment → casting. First, steel having given chemical constituents is formed into ingots using a high-frequency melting furnace, electric furnace, converter or the like. Next, component adjustment is carried out by vacuum refining or the like to remove impurity elements such as S and gaseous components such as oxygen, after which the steel is cast into cast ingots. In particular, by regulating the Mn/Si ratio to 5.50 or more, the maximum size of coarse prior austenite grains can be suitably controlled, enabling the formation of coarse grains to be suppressed. Also, the Mn concentration in cementite can be adjusted by regulating the amount of Mn in the steel. The casting method is not particularly limited. In the case of steel intended for large forgings, use is primarily made of ingot casting, but a continuous casting process may be used for relatively small steel forgings.

The invention also encompasses a crankshaft obtained using this steel. The method of producing the crankshaft is not particularly limited. For example, production may be carried out by: heating the steel → material forging → removing by in-process inspection defective product after material forging, then heating and forging into a crankshaft shape → homogenization by heat treatment → hardening by quenching and tempering treatment → and finish machining.

In these steps, an ordinary method may be used without particular limitation to forge the steel into a crankshaft shape. Examples include free-forging in which the steel is forged into a monolithic block that includes the crank arm and the crank pin, and then is finished to the crankshaft shape by gas cutting and machining; and R.R. forging and T.R. forging in which the steel is forged into the shape of a crankshaft. By using in particular the latter forging techniques, that is, R.R. forging and T.R. forging, the shaft surface layer side of the crankshaft can be made of steel having a high degree of cleanliness, enabling a crankshaft of excellent strength and fatigue properties to be easily obtained.

In these steps, homogenization by heat treatment is sometimes called austenitizing treatment. Austenitizing treatment preferably involves, for example, heating in a temperature range of from room temperature to between 820 and 950°C at an average ramp-up rate of 30 to 100°C/hr, and holding the temperature at between 820 and 950°C for 3 to 20 hours.

After such holding, quenching and tempering are carried out as described above. Quenching preferably involves cooling in a temperature range of, for example, 870°C to 500°C at an average cooling rate of 5 to 50°C/min. Tempering preferably involves heating in a temperature range of 550°C to 680°C, holding the temperature in this range for 5 to 20 hours, and then cooling. At a high tempering temperature, the tensile strength tends to decrease, but the toughness and fatigue properties can be improved.

This application claims priority from Japanese Patent Application No. 2013-176113 filed on August 27, 2013, the entire contents of which are incorporated herein by reference.

**Examples**

The invention is described more fully below by way of examples, but is not limited by these examples.

[Preparation of Test Samples]

(Examples 1 to 3 and 8 to 10, and Comparative Examples 1 to 19)

A feedstock having the constituent composition shown in Table 1, with the balance being iron and inevitable impurities, was ingoted in a high-frequency furnace and cast into a 50 kg steel ingot having a diameter of 150 mm and a length of 323 mm. The head portion of the resulting steel ingot was cut away and the ingot was heated at 1,230°C for 10 hours, following which material forging was carried out in which a free-forging press was used to compress the ingot to a height ratio of 1/2 from a pre-compression height of 320 mm. Next, the steel ingot centerline was rotated 90° and forging was carried out, extending the ingot to dimensions of 90 mm × 90 mm × 450 mm, after which the ingot was left to cool in open air. Once the ingot had cooled down to room temperature, austenitizing treatment was carried out using a small-scale simulation furnace. Austenitizing treatment involved raising the temperature from room temperature to 870°C at an average ramp-up rate of 50°C/hr, then holding the temperature for 3 hours. After holding, quenching was carried out by cooling the ingot through a temperature range of 870°C to 500°C at an average cooling rate of 50°C/min. After quenching, the ingot was tempered by being held at 600°C for 13 hours, following which the furnace was cooled. Each of the test samples was prepared in this way. In Table 1, a dash (-) indicates a value below the limit of measurement.

(Examples 4 and 5)

Aside from setting the heating time at 1230°C to 5 hours and the tempering temperature to 580°C, test samples were prepared in the same way as in Example 1.

(Examples 6 and 7)

Aside from setting the heating time at 1230°C to 5 hours and the tempering temperature to 560°C, test samples were prepared in the same way as in Example 1.

[Table 1]

| | Composition contents (mass %) | | | | | | | | | | | | Mn/Si |
|---|---|---|---|---|---|---|---|---|---|---|---|---|---|
| | C | Si | Mn | P | S | Cu | Ni | Cr | Mo | V | Al | N | |
| Example 1 | 0.35 | 0.05 | 0.80 | 0.004 | 0.003 | - | 1.6 | 1.6 | 0.50 | 0.15 | 0.0250 | 0.0050 | 16.00 |
| Example 2 | 0.35 | 0.05 | 1.20 | 0.004 | 0.002 | - | 1.6 | 1.6 | 0.50 | 0.15 | 0.0250 | 0.0051 | 24.00 |
| Example 3 | 0.35 | 0.05 | 0.80 | 0.004 | 0.003 | - | 2.0 | 1.6 | 0.50 | 0.15 | 0.0250 | 0.0045 | 16.00 |
| Example 4 | 0.35 | 0.05 | 1.20 | 0.004 | 0.002 | - | 1.6 | 1.6 | 0.50 | 0.15 | 0.0250 | 0.0060 | 24.00 |
| Example 5 | 0.35 | 0.05 | 0.80 | 0.004 | 0.003 | - | 2.0 | 1.6 | 0.50 | 0.15 | 0.0250 | 0.0060 | 16.00 |
| Example 6 | 0.35 | 0.05 | 1.20 | 0.004 | 0.002 | - | 1.6 | 1.6 | 0.50 | 0.15 | 0.0250 | 0.0060 | 24.00 |
| Example 7 | 0.35 | 0.05 | 0.80 | 0.004 | 0.003 | - | 2.0 | 1.6 | 0.50 | 0.15 | 0.0250 | 0.0060 | 16.00 |
| Example 8 | 0.35 | 0.15 | 0.84 | 0.004 | 0.003 | - | 2.0 | 1.6 | 0.50 | 0.15 | 0.0250 | 0.0048 | 5.60 |
| Example 9 | 0.35 | 0.10 | 0.80 | 0.004 | 0.003 | - | 2.0 | 1.6 | 0.50 | 0.15 | 0.0250 | 0.0050 | 8.00 |
| Example 10 | 0.35 | 0.05 | 0.80 | 0.004 | 0.003 | 0.90 | 2.0 | 1.6 | 0.50 | 0.15 | 0.0250 | 0.0060 | 16.00 |
| Comparative Example 1 | 0.28 | 0.05 | 0.80 | 0.003 | 0.003 | - | 1.6 | 1.6 | 0.51 | 0.15 | 0.0250 | 0.0048 | 16.00 |
| Comparative Example 2 | 0.52 | 0.05 | 0.81 | 0.004 | 0.003 | - | 1.6 | 1.6 | 0.50 | 0.16 | 0.0260 | 0.0051 | 16.20 |
| Comparative Example 3 | 0.34 | 0.16 | 0.90 | 0.004 | 0.002 | - | 1.6 | 1.6 | 0.49 | 0.15 | 0.0250 | 0.0049 | 5.63 |
| Comparative Example 4 | 0.35 | 0.10 | 1.60 | 0.004 | 0.003 | - | 1.6 | 1.6 | 0.50 | 0.16 | 0.0250 | 0.0060 | 16.00 |
| Comparative Example 5 | 0.36 | 0.04 | 0.80 | 0.004 | 0.003 | - | 0.7 | 1.6 | 0.50 | 0.15 | 0.0250 | 0.0050 | 20.00 |
| Comparative Example 6 | 0.35 | 0.05 | 0.81 | 0.003 | 0.002 | - | 2.6 | 1.6 | 0.50 | 0.15 | 0.0230 | 0.0050 | 16.20 |
| Comparative Example 7 | 0.36 | 0.06 | 0.80 | 0.004 | 0.003 | - | 1.6 | 0.9 | 0.48 | 0.14 | 0.0250 | 0.0048 | 13.33 |
| Comparative Example 8 | 0.35 | 0.05 | 0.82 | 0.004 | 0.003 | - | 1.6 | 3.2 | 0.50 | 0.15 | 0.0270 | 0.0050 | 16.40 |
| Comparative Example 9 | 0.36 | 0.04 | 0.80 | 0.003 | 0.002 | - | 1.6 | 1.6 | 0.33 | 0.15 | 0.0250 | 0.0050 | 20.00 |
| Comparative Example 10 | 0.35 | 0.05 | 0.81 | 0.004 | 0.003 | - | 1.6 | 1.6 | 0.72 | 0.14 | 0.0220 | 0.0048 | 16.20 |
| Comparative Example 11 | 0.33 | 0.06 | 0.80 | 0.004 | 0.002 | - | 1.6 | 1.6 | 0.50 | 0.08 | 0.0250 | 0.0053 | 13.33 |
| Comparative Example 12 | 0.35 | 0.05 | 0.83 | 0.003 | 0.003 | - | 1.6 | 1.6 | 0.51 | 0.27 | 0.0250 | 0.0051 | 16.60 |
| Comparative Example 13 | 0.35 | 0.05 | 0.80 | 0.004 | 0.002 | - | 1.6 | 1.6 | 0.50 | 0.15 | 0.0004 | 0.0052 | 16.00 |
| Comparative Example 14 | 0.35 | 0.05 | 0.80 | 0.004 | 0.003 | - | 1.6 | 1.6 | 0.50 | 0.14 | 0.0430 | 0.0051 | 16.00 |

(continued)

| | Composition contents (mass %) | | | | | | | | | | | | Mn/Si |
|---|---|---|---|---|---|---|---|---|---|---|---|---|---|
| | C | Si | Mn | P | S | Cu | Ni | Cr | Mo | V | Al | N | |
| Comparative Example 15 | 0.34 | 0.15 | 0.82 | 0.004 | 0.003 | - | 1.6 | 1.6 | 0.50 | 0.15 | 0.0250 | 0.0051 | 5.47 |
| Comparative Example 16 | 0.35 | 0.15 | 0.80 | 0.004 | 0.003 | - | 1.6 | 1.6 | 0.50 | 0.15 | 0.0250 | 0.0049 | 5.33 |
| Comparative Example 17 | 0.35 | 0.15 | 0.77 | 0.004 | 0.003 | - | 1.6 | 1.6 | 0.50 | 0.15 | 0.0250 | 0.0050 | 5.13 |
| Comparative Example 18 | 0.34 | 0.22 | 0.98 | 0.007 | 0.003 | 0.04 | 1.6 | 1.6 | 0.49 | 0.16 | 0.0200 | 0.0050 | 4.45 |
| Comparative Example 19 | 0.35 | 0.08 | 0.35 | 0.015 | 0.003 | - | 3.0 | 1.6 | 0.45 | 0.10 | 0.0250 | 0.0050 | 4.38 |

[Measurement of Mechanical Properties]

The tensile strength TS of the test samples was measured by a tensile test. The tensile test was carried out based on JIS-Z-2241. The test sample shape was that of the No. 14 test sample in JIS-Z-2201, the dimensions being 6 mm (diameter) x G. 30 mm. Here, "G. 30 mm" means that the length of the parallel portion is 30 mm.

The absorbed energy (vE) at room temperature of the test sample was measured by the Charpy impact test, and the toughness was evaluated. The Charpy impact test was carried out at room temperature based on JIS-Z-2242. As for the test sample, the 2 mm V notch described in JIS-Z-2202 was used.

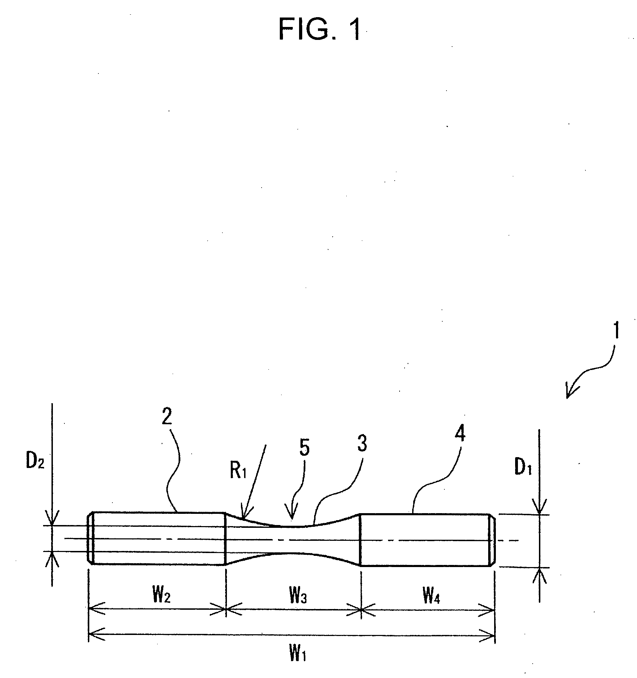

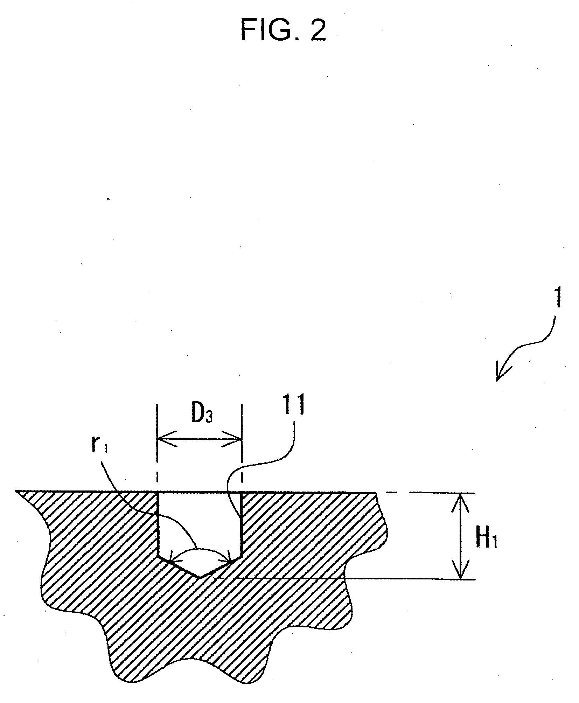

Evaluation of the fatigue strength was carried out by the following fatigue test using the endurance limit ratio (breaking stress measured in fatigue test/maximum stress in tensile test) as the indicator. Fig. 1 shows the shape of the fatigue test sample 1 used in the fatigue test. The fatigue test samples 1 were machined to a shape consisting of two cylindrical portions 2 and 4 connected by a portion 3 therebetween having a constricted shape. The cylindrical portions 2 and 4 each had smooth finished surfaces, and the constricted portion 3 was sanded with sandpaper in the axial direction to a precise finished surface. The total length $W_1$ of the fatigue test sample 1 was 90 mm, the length $W_2$ of the cylindrical portion 2 was 30 mm, the length $W_3$ of the constricted portion 3 was 30 mm, the length $W_4$ of the cylindrical portion 4 was 30 mm, the diameter $D_1$ of the cylindrical portions 2 and 4 and at both ends of the constricted portion 3 was 12 mm, and the diameter $D_2$ at the center of the constricted portion 3 was 6 mm. The constricted portion 3 had a radius of curvature $R_1$ of 39 mm and was constricted by the partial absence of material at the center thereof. In the fatigue test sample 1, a micro hole 11 having the cross-sectional shape shown in Fig. 2 was formed perpendicular to the surface with a drill as an artificial defect simulating an inclusion at a center position 5 on the fatigue test sample 1. The micro hole 11 had a shape consisting of a cylinder with a cone connected to the bottom thereof. The diameter $D_3$ of the micro hole 11 in the fatigue test sample 1 was 68 $\mu$m, the depth $H_1$ to the apex of the cone was 68 $\mu$m, and the angle $r_1$ at the apex of the cone cross-section was 120°.

The fatigue test was carried out with an Ono-type rotating bending fatigue tester (model H7) from Shimadzu Corporation. The test conditions were set to a load of 10 kgfm, a rotational speed of 3,000 rpm, and a stress ratio of -1. The fatigue test was begun by setting the initial stress to 440 MPa, and the fatigue test sample 1 was rotated $3 \times 10^6$ times. The stress test was repeated while increasing the stress in 20 MPa increments. The maximum value of the nominal stresses when the fatigue test sample 1 did not break even after $3 \times 10^6$ rotations was treated as the breaking stress. In other words, the value obtained by subtracting 20 MPa from the minimum value of the stress applied when the fatigue test sample 1 broke before being rotated $3 \times 10^6$ times was treated as the breaking stress.

[Martensite Percentage]

The martensite percentage was determined by Nital etching a cross-section of the test sample in the L (lengthwise) direction, observing a position at 1/4 of the depth in the cross-section, photographing it at a magnification of 100X, visually examining the micrograph and separating the martensite from other metal microstructures, and calculating the surface area percentage.

[Size of Prior Austenite Grains]

The position at 1/4 depth in the test sample was examined at a magnification of 100X with an optical microscope and, setting the field of observation to 860 $\mu$m $\times$ 700 $\mu$m, the size of the prior austenite grains was measured. Setting the number of observation fields to five fields, the largest size of the prior austenite grains observed within the five fields was taken as the maximum grain size. In those examples in which "not measurable" is noted in the "maximum size of prior austenite grains" column in Table 2, this means that the prior austenite grains were too coarse, making it impossible to measure the maximum grain size.

[Mn Concentration in Cementite]

The position at 1/4 depth in the test sample was examined at a magnification of 8000X, and an observation field of 15 $\mu$m $\times$ 15 $\mu$m was examined by SEM. The Mn concentration in the examined cementite was measured by quantitative analysis using EDX with SEM. The number of observation fields was set to five fields, and the average value was determined.

Table 2 shows the results for the value of X determined based on formula (1), the martensite percentage obtained by the above measurement, the maximum grain size, the Mn concentration in cementite, the tensile strength TS, the absorbed energy (vE) at room temperature and the endurance limit ratio.

[Table 2]

| | X | Martensite (surface area %) | Maximum size of prior austenite grains (μm) | Mn concentration in cementite (mass %) | TS (MPa) | vE at room temperature (J) | Endurance limit ratio |
|---|---|---|---|---|---|---|---|
| Example 1 | 684 | 98 | 40 | 0.92 | 1083 | 88 | 0.54 |
| Example 2 | 699 | 100 | 50 | 1.38 | 1098 | 87 | 0.53 |
| Example 3 | 705 | 100 | 45 | 0.92 | 1103 | 86 | 0.54 |
| Example 4 | 699 | 100 | 50 | 1.36 | 1215 | 78 | 0.48 |
| Example 5 | 705 | 100 | 45 | 0.93 | 1228 | 62 | 0.48 |
| Example 6 | 699 | 100 | 50 | 1.35 | 1305 | 78 | 0.46 |
| Example 7 | 705 | 100 | 45 | 0.92 | 1310 | 62 | 0.46 |
| Example 8 | 699 | 100 | 90 | 0.97 | 1097 | 87 | 0.54 |
| Example 9 | 701 | 100 | 75 | 0.92 | 1099 | 86 | 0.52 |
| Example 10 | 705 | 100 | 45 | 0.93 | 1245 | 61 | 0.48 |
| Comparative Example 1 | 613 | 85 | not measurable | 0.92 | 951 | 100 | 0.50 |
| Comparative Example 2 | 868 | 100 | not measurable | 0.93 | 1266 | 23 | 0.44 |
| Comparative Example 3 | 669 | 97 | not measurable | 1.04 | 1067 | 25 | 0.41 |
| Comparative Example 4 | 719 | 100 | not measurable | 1.84 | 1118 | 40 | 0.39 |
| Comparative Example 5 | 650 | 89 | not measurable | 0.92 | 987 | 27 | 0.50 |
| Comparative Example 6 | 735 | 100 | not measurable | 0.93 | 1134 | 45 | 0.48 |
| Comparative Example 7 | 662 | 91 | not measurable | 0.92 | 1011 | 94 | 0.50 |
| Comparative Example 8 | 736 | 100 | not measurable | 0.94 | 1134 | 27 | 0.47 |
| Comparative Example 9 | 681 | 92 | not measurable | 0.92 | 1019 | 93 | 0.49 |
| Comparative Example 10 | 693 | 99 | not measurable | 0.90 | 1092 | 31 | 0.46 |
| Comparative Example 11 | 604 | 87 | not measurable | 0.92 | 974 | 98 | 0.49 |
| Comparative Example 12 | 787 | 100 | not measurable | 0.95 | 1185 | 24 | 0.45 |
| Comparative Example 13 | 684 | 98 | not measurable | 0.92 | 1083 | 28 | 0.47 |
| Comparative Example 14 | 676 | 97 | not measurable | 0.92 | 1075 | 36 | 0.48 |
| Comparative Example 15 | 667 | 97 | 400 | 0.94 | 1066 | 24 | 0.42 |

(continued)

| | X | Martensite (surface area %) | Maximum size of prior austenite grains ($\mu$m) | Mn concentration in cementite (mass %) | TS (MPa) | vE at room temperature (J) | Endurance limit ratio |
|---|---|---|---|---|---|---|---|
| Comparative Example 16 | 677 | 98 | 450 | 0.92 | 1075 | 25 | 0.43 |
| Comparative Example 17 | 676 | 97 | 450 | 0.89 | 1074 | 21 | 0.40 |
| Comparative Example 18 | 676 | 97 | 500 | 1.13 | 1073 | 90 | 0.43 |
| Comparative Example 19 | 690 | 99 | 105 | 0.38 | 1088 | 102 | 0.42 |

[Measurement Results]

Examples 1 to 10 are all examples that satisfy the conditions of the invention. Along with having specific compositions, the Mn/Si ratios are 5.50 or more, and the metal microstructures are primarily martensite. Also, because the Mn/Si ratios were controlled to 5.50 or more, it was possible to hold down the maximum size of prior austenite grains to 100 $\mu$m or less. As a result, in all of these examples, the tensile strength TS was 1050 MPa or more, the absorbed energy (vE) at room temperature was 50 J or more, and the endurance limit ratio was 0.45 or more, enabling a high strength, high toughness and high fatigue strength to be achieved.

Of these examples, in Examples 2 to 10 in particular, because the value X expressed in formula (1) is controlled to 690 or more, the tensile strength TS was higher than in Example 1 in which the value X was less than 690.

Also, of the above examples, Examples 2, 4 and 6 are examples in which the constituent composition was the same, with only the tempering temperature being varied in production. In Examples 2, 4 and 6, the tempering temperature was increased in this order and the tensile strength TS became lower, yet the absorbed energy at room temperature and the endurance limit ratio both showed rising trends in this order. A similar trend was observed also for Examples 3, 5 and 7.

By contrast, Comparative Examples 1 to 19 are examples in which the conditions specified for this invention were not all satisfied.

Comparative Example 1 is an example in which the C content was low, the martensite percentage had decreased, and the value of X fell below 690. As a result, the tensile strength decreased.

Comparative Example 2 is an example in which the C content was excessive. Here, the toughness and fatigue properties both decreased.

Comparative Example 3 is an example in which the Si content was excessive. Here, the toughness and fatigue properties both worsened.

Comparative Example 4 is an example in which the Mn content was excessive and the Mn concentration in cementite was high. As a result, the toughness and fatigue strength both decreased.

Comparative Example 5 is an example in which the Ni content was low, the martensite percentage decreased, and the value of X fell below 690. As a result, the strength and toughness decreased.

Comparative Example 6 is an example in which the Ni content was excessive. Here, the toughness decreased.

Comparative Example 7 is an example in which the Cr content was low, the martensite percentage decreased, and the value of X fell below 690. As a result, the strength decreased.

Comparative Example 8 is an example in which the Cr content was excessive. Here, the toughness decreased.

Comparative Example 9 is an example in which the Mo content was low, the martensite percentage decreased, and the value of X fell below 690. As a result, the toughness decreased.

Comparative Example 10 is an example in which the Mo content was excessive. Here, the toughness decreased.

Comparative Example 11 is an example in which the V content was low, the martensite percentage decreased, and the value of X fell below 690. As a result, the strength decreased.

Comparative Example 12 is an example in which the V content was excessive. Here, the toughness decreased.

Comparative Example 13 is an example in which the A1 content was low, and Comparative Example 14 is an example in which the A1 content was excessive. Both had a decreased toughness.

Comparative Examples 15 and 16 are each examples in which the Mn/Si ratio was small. Coarse prior austenite grains formed in the metal microstructure. The toughness and fatigue properties decreased.

Comparative Example 17 is an example in which the Mn content in steel was low, as a result of which the Mn/Si ratio was low and the Mn concentration in cementite was low. Coarse prior austenite grains formed in the metal microstructure, as a result of which the toughness and fatigue properties decreased.

Comparative Example 18 is an example that simulated Steel Type I in Patent Document 2. In this example, the Si content of 0.22% was excessive, and so the Mn/Si ratio was small. As a result, prior austenite grain coarsened and the fatigue properties decreased.

Comparative Example 19 is an example that simulated Steel Type A in Patent Document 1. In this example, excessive N was included, the Mn content was low, and the Mn/Si ratio was small. As a result, the fatigue properties decreased.

Industrial Applicability

The high-strength steel of the invention and the crankshaft of the invention manufactured using this high-strength steel are endowed with a high fatigue strength while also having increased strength and toughness. Hence, the crankshaft of the invention is suitable for use in, for example, diesel engines for ships, generators and the like.

1    Fatigue test sample

2    Cylindrical portion

3    Constricted portion

4    Cylindrical portion

5    Center position

11    Micro hole

**Claims**

**1.** A high-strength steel comprising:

C: 0.30 mass % or more and 0.50 mass % or less;
Si: more than 0 mass % and 0.15 mass % or less;
Mn: 0.80 mass % or more and 1.5 mass % or less;
Ni: 0.8 mass % or more and 2.4 mass % or less;
Cr: 1.0 mass % or more and 3.0 mass % or less;
Mo: 0.35 mass % or more and 0.70 mass % or less;
V: 0.10 mass % or more and 0.25 mass % or less; and
Al: 0.001 mass % or more and 0.040 mass % or less,
with the balance being iron and inevitable impurities,
wherein the high-strength steel is mainly composed of martensite,
a Mn concentration in cementite is 0.90 mass % or more and 1.80 mass % or less, and
a ratio of Mn content to Si content is 5.50 or more.

**2.** The high-strength steel according to claim 1, further comprising Cu in the range of more than 0 mass % and 2 mass % or less.

**3.** The high-strength steel according to claim 1 or 2, wherein X defined by formula (1) below is 690 or more:

$$X = 1026.4 \times C - 75.4 \times Si + 37.7 \times Mn + 50.6 \times Ni + 31.7 \times Cr + 82.5 \times Mo + 838.4 \times V \qquad (1),$$

C, Si, Mn, Ni, Cr, Mo and V being respectively values representing the contents, in percent by mass, of C, Si, Mn, Ni, Cr, Mo and V.

**4.** A crankshaft manufactured using the high-strength steel according to claim 1.

# FIG. 1

# FIG. 2

# FIG. 3

## INTERNATIONAL SEARCH REPORT

| International application No. |
| --- |
| PCT/JP2014/072278 |

**A. CLASSIFICATION OF SUBJECT MATTER**
*C22C38/00*(2006.01)i, *C22C38/46*(2006.01)i, *F16C3/06*(2006.01)i

According to International Patent Classification (IPC) or to both national classification and IPC

**B. FIELDS SEARCHED**

Minimum documentation searched (classification system followed by classification symbols)
C22C38/00, C22C38/46, F16C3/06

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | US 5496516 A   (A. Finkl & Sons Co.), 05 March 1996 (05.03.1996), entire text; all drawings & US 5888450 A | 1–4 |
| A | JP 2009-91649 A  (Kobe Steel, Ltd.), 30 April 2009 (30.04.2009), entire text; all drawings & EP 1978124 A1          & KR 10-2008-0091019 A | 1–4 |
| A | JP 2011-84784 A  (Independent Administrative Institution National Institute for Materials Science), 28 April 2011 (28.04.2011), 0027 (Family: none) | 1–4 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 11 November, 2014 (11.11.14) | Date of mailing of the international search report 18 November, 2014 (18.11.14) |
| --- | --- |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/072278

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-80951 A (Kobe Steel, Ltd.), 22 March 2002 (22.03.2002), 0027 (Family: none) | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010248540 A
- JP 4332070 B
- JP 2013176113 A